# FASCICULE DE BREVET EUROPEEN

(11) **EP 1 776 007 B1**
(45) Date de publication et mention de la délivrance du brevet: **14.11.2012**
(21) Numéro de dépôt: 05779715.1
(22) Date de dépôt: 01.07.2005
(51) Int. Cl.: A01B 23/02, A01B 35/22

(54) **DENT DE CULTIVATEUR POUR CHASSIS PORTE-DENTS DE TRAVAIL DU SOL**
ZINKEN FÜR DAS GESTELL EINES BODENBEARBEITUNGSZINKENS
CULTIVATOR TINE FOR A SOIL CULTIVATION TINE SUPPORT FRAME

(30) Priorité: 16.07.2004 FR 0407920
(43) Date de publication de la demande: 25.04.2007
(73) Titulaire: Etablissements Grégoire Besson et Cie, 49230 Montigne-sur-Moine (FR)
(72) Inventeur: HUNDEBY, Dave, Saskatoon, S7K S7 (CA); THIROUIN, Cyril, 91640 Briis-sous-Forges (FR)
(74) Mandataire: Laget, Jean-Loup
(86) Numéro de dépôt international: PCT/FR2005/001681
(87) Numéro de publication internationale: WO 2006/016033

(56) Documents cités:
- EP-A- 0 704 146
- DE-A1- 10 013 621
- US-A- 4 932 478
- US-A- 5 007 484

## Description

La présente invention concerne une dent de cultivateur, pour châssis porte-dents de travail du sol, du type constitué d'un étançon porteur et d'une pièce d'usure amovible travaillant dans le sol.

De telles dents sont généralement installées sur un châssis sous forme de une ou plusieurs rangées de dents pour couvrir à chaque fois une largeur de travail. Chaque dent présente une pièce travaillante associée généralement par boulonnage à l'étançon en vue d'en faciliter son démontage. En effet, lorsque la pièce travaillante est usée, il doit être possible de la remplacer. Par ailleurs, un tel mode de fixation permet un réglage de la position de la pièce travaillante autorisant par exemple un déplacement vers le sol de la pièce travaillante au fur et à mesure de son usure.

Depuis longtemps, il a été constaté que l'écrou et/ou le boulon s'usent ou se déforment au contact du sol ou des pierres se trouvant dans le sol au cours de l'avancement du châssis comme l'illustre le brevet US-5.007.484. De ce fait, il est difficile voire impossible de démonter l'écrou du boulon avec des outils appropriés, tels que clé manuelle ou à choc. Il est souvent nécessaire de couper mécaniquement le boulon avec un burin, une scie, une tronçonneuse ou un chalumeau. Les conséquences en sont une perte de temps et éventuellement la nécessité de remplacer l'étançon et/ou la pièce travaillante au cas où celle-ci aurait été endommagée par la coupe mécanique. Enfin, le boulon et/ou la fixation de manière générale ne sont plus réutilisables.

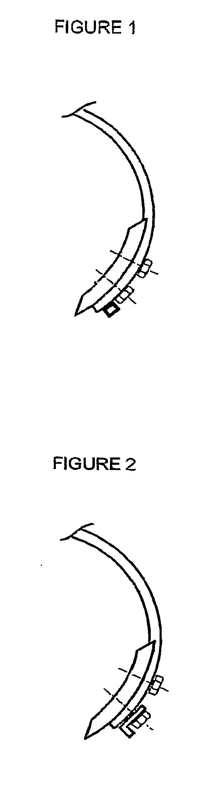

Pour pallier ces inconvénients, diverses solutions ont été imaginées comme l'illustrent notamment les figures 1 et 2. Ainsi, il a d'ores et déjà été imaginé de rapporter, au voisinage de l'extrémité libre de l'étançon, un ergot soudé destiné à former un écran assurant une protection du boulon comme le décrit notamment le brevet EP-0.704.146. Cette solution a l'inconvénient d'ajouter de la matière à la base de l'étançon. La conséquence en est un manque de dégagement entre le bas de l'étançon et la partie inférieure de la pièce d'usure. Ainsi, lorsque la pièce d'usure commence à s'user, le bas de l'étançon risque alors de s'user à son tour. Une autre conséquence de cet ajout de matière est le risque de nuire à la bonne pénétration de la dent générant un effet de talonnage.

Une deuxième solution, conforme à celle représentée à la figure 2, consiste à rapporter, en amont de l'étançon pris dans le sens d'avancement du châssis, une plaque pliée. Les inconvénients constatés avec l'ergot sont également présents dans ce type de solution.

Une troisième solution est décrite dans le brevet US-A-4.932.478. Ce brevet décrit un étançon muni d'une pièce protectrice et d'une pièce d'usure amovible solidarisée à l'étançon au niveau de son extrémité libre. La solidarisation de la pièce d'usure à l'étançon est obtenue par un axe s'étendant transversalement à l'axe d'avancement de l'étançon. Cet axe traverse de part en part l'étançon avant de pénétrer dans des logements de la pièce d'usure. Ces logements sont de dimension largement supérieure à l'axe pour permettre la réception d'un écrou. Ce surdimensionnement des logements ménagés dans la pièce d'usure oblige à renforcer la pièce d'usure pour ne pas porter atteinte à sa résistance mécanique. Il en résulte un surcoût au moment de la production. En outre, par la présence de ces logements, on fragilise la pièce d'usure déjà fortement sollicitée lors du travail de la dent. Cette solution n'est donc pas satisfaisante.

Un but de la présente invention est donc de proposer une dent de cultivateur pour châssis porte-dents de travail du sol dont les moyens de fixation entre pièce d'usure, pièce travaillante et étançon ne sont pas soumis à l'usure et à la déformation autorisant ainsi un démontage aisé de la pièce d'usure travaillante en vue d'un remplacement ou d'un réglage de ladite pièce.

Un autre but de la présente invention est de proposer une dent de cultivateur dont la conception de la fixation de la pièce de travail amovible à l'étançon favorise le démontage de la pièce de travail sans nuire à la résistance mécanique de l'étançon ou de la pièce de travail.

A cet effet, l'invention a pour objet une dent de cultivateur pour châssis porte-dents de travail du sol du type comprenant au moins un étançon porteur et une pièce d'usure amovible travaillant dans le sol, caractérisée en ce que la fixation de la pièce de travail amovible à l'étançon est formée principalement d'un logement ménagé dans l'étançon, au voisinage de l'extrémité libre de l'étançon, pour recevoir au moins un organe d'immobilisation d'un organe de liaison, généralement du genre boulon ou clavette entre pièce d'usure et étançon, pour isoler la partie de prise dudit organe d'immobilisation en vue d'empêcher son usure prématurée par abrasion, ledit logement étant de dimension supérieure à la dimension de l'organe d'immobilisation pour autoriser un accès permanent audit organe lors des opérations de remplacement ou de réglage de la pièce d'usure travaillante.

Grâce au fait de ménager un logement de plus grande dimension dans l'étançon et non dans la pièce travaillante ou d'usure fortement sollicitée, on ne réduit pas la résistance mécanique de la pièce travaillante.

Selon une forme de réalisation préférée de l'invention, le logement de l'organe d'immobilisation ménagé dans l'étançon est obtenu, sans enlèvement de matière, par forgeage, de préférence à chaud, pour densifier dans cette zone la matière constitutive de l'étançon.

Grâce à la technologie retenue pour la réalisation du logement de l'organe d'immobilisation, la résistance mécanique de l'étançon n'est en aucun cas affaiblie.

L'invention sera bien comprise à la lecture de la description suivante d'exemples de réalisation, en référence aux dessins annexés dans lesquels :
les figures 1 et 2 représentent l'état de la technique ;
la figure 3 représente une vue latérale partielle d'une dent de cultivateur conforme à l'invention ;
la figure 4 représente une vue latérale partielle de l'étançon ;

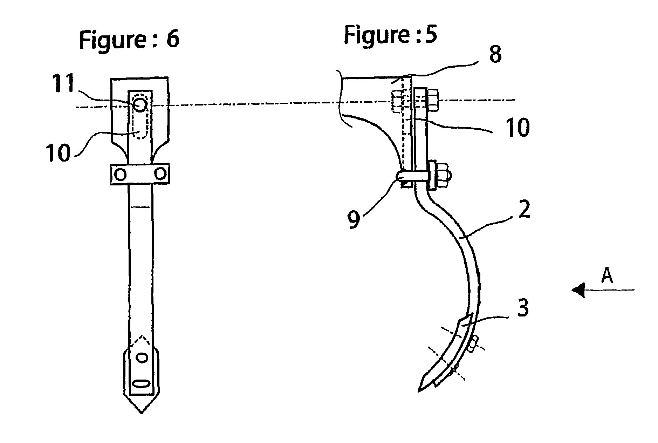

la figure 5 représente une vue latérale d'une dent conforme à l'invention avec son dispositif de réglage en position ;
la figure 6 représente une vue suivant A de la figure 5 ;
les figures 7 à 9 illustrent d'autres formes de réalisation de dents de cultivateur conformes à l'invention et
la figure 10 représente une vue schématique partielle d'un autre mode de liaison entre étançon et pièce d'usure.

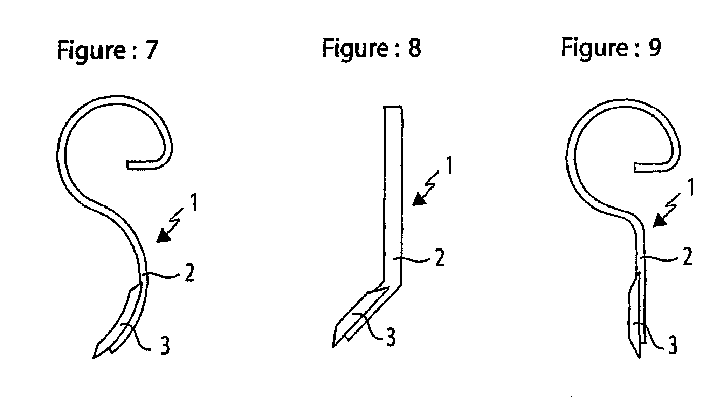

Comme mentionné ci-dessus, la dent 1 de cultivateur, objet de l'invention, est destinée à être positionnée sur un châssis porte-dents de travail du sol. Cette dent 1 de cultivateur est constituée d'un étançon 2 raccordable au châssis généralement par l'intermédiaire d'un dispositif de sécurité dit non stop. Cet étançon 2 porte une pièce 3 d'usure amovible travaillant dans le sol. Comme son nom l'indique, cette pièce 3 doit être changée régulièrement. C'est pour cette raison que cette pièce 3 est fixée de manière amovible à l'étançon 2. Etançon 2 et pièce 3 d'usure peuvent affecter un grand nombre de formes comme l'illustrent les figures 7 à 9 dans lesquelles ont été représentées respectivement une dent flexible en S, une dent rigide et une dent flexible droite. La description ci-après sera plus particulièrement appliquée à une dent en C.

La pièce 3 de travail ou d'usure est rapportée sur la partie frontale ou bord d'attaque de l'étançon 2 s'étendant au voisinage de l'extrémité libre de l'étançon 2. Elle vient ainsi en applique pour couvrir la partie avant de l'étançon et protège ce dernier lors du travail dans le sol de l'ensemble de la dent.

La fixation de la pièce 3 de travail amovible à l'étançon est constituée principalement d'un logement 4 ménagé au voisinage de l'extrémité libre de l'étançon 2. Ce logement 4 permet de recevoir au moins un organe 5 d'immobilisation d'un organe 6 de liaison entre pièce 3 d'usure et étançon 2. Ce logement 4 permet ainsi d'isoler la partie de prise dudit organe 5 d'immobilisation en vue d'empêcher son usure prématurée par abrasion. Ce logement 4 est de dimension supérieure à la dimension de l'organe 5 d'immobilisation pour autoriser un accès permanent à l'organe 5 lors des opérations de remplacement ou de réglage de la pièce 3 d'usure travaillante.

Généralement, la pièce 3 d'usure travaillante et l'étançon 2 sont reliés entre eux par boulonnage. Dans ce cas, la vis constitue l'organe 6 de liaison entre pièce 3 et étançon 2 tandis que l'écrou constitue l'organe 5 d'immobilisation. Une forme de réalisation équivalente peut être obtenue par utilisation d'une clavette qui constitue l'organe 6 de liaison et d'une goupille constituant l'organe 5 d'immobilisation de la clavette. Généralement, la pièce 3 d'usure comporte donc un logement traversant fraisé pour la réception d'une vis dont l'extrémité opposée à la tête de vis vient se loger dans le logement ménagé à cet effet dans l'étançon 2 pour y recevoir par montage un écrou 5. Les logements ménagés respectivement dans la pièce 3 d'usure et dans l'étançon délimitent un passage pour l'organe 6 de liaison s'étendant depuis l'avant vers l'arrière de ladite dent dans un plan sensiblement parallèle à l'axe d'avancement de la dent. Dans le cas d'un écrou, il est fondamental que le logement 4 soit de dimension supérieur à la dimension de l'organe 5 d'immobilisation pour permettre à des outils traditionnels d'accéder aux parties de prise de l'écrou, en l'occurrence au pourtour de ce dernier et autoriser un dévissage de ce dernier.

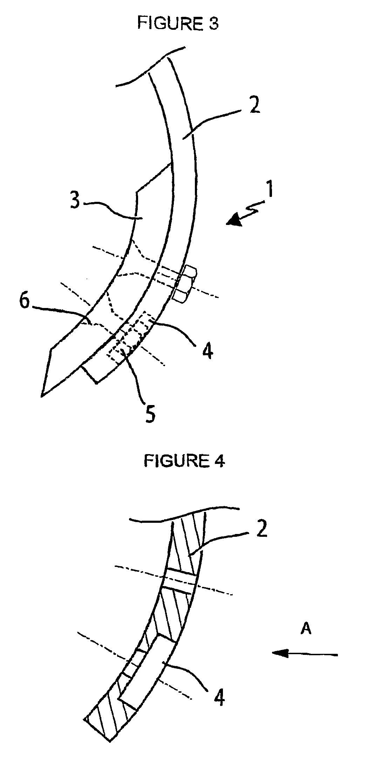

Diverses configurations de liaison peuvent être envisagées entre pièce 3 d'usure et étançon 2. Ainsi, comme l'illustrent les figures 3 et suivantes, la pièce 3 d'usure travaillante peut être couplée directement à l'étançon 2 par boulonnage.

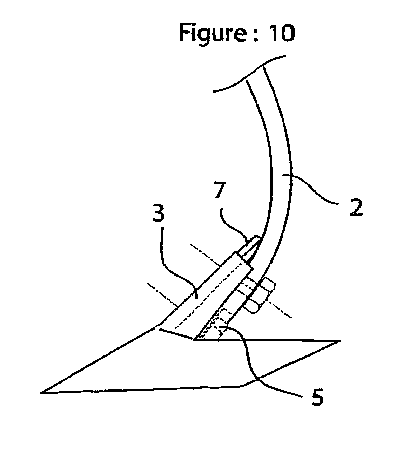

Dans la figure 10, la pièce 3 d'usure est couplée à l'étançon 2, par une pièce 7 intermédiaire boulonnée à l'étançon 2, et sur laquelle la pièce 3 d'usure vient s'engager à coulissement. Le boulon reliant la pièce 7 et l'étançon 2 est muni d'un écrou monté dans un logement de l'étançon de manière analogue à ce qui a été mentionné ci-dessus dans le cas d'une liaison directe entre pièce 3 d'usure et étançon 2.

Ce logement 4 de l'organe 5 d'immobilisation ménagé dans l'étançon 2 est de préférence obtenu sans enlèvement de matière par forgeage, de préférence à chaud, pour densifier dans cette zone la matière constitutive de l'étançon. Ce logement peut être de forme ronde, oblongue, hexagonale, rectangulaire ou carrée. Suivant le type de fixation retenue, ce logement peut être ménagé sur le dos de l'étançon ou sur la ou les partie(s) latérale(s) de ce dernier. Un tel logement peut être dimensionné pour recevoir un ou plusieurs organes 5 d'immobilisation. Grâce à cette conception, aucune matière n'est ajoutée au niveau de l'extrémité libre d'étançon de telle sorte que l'effet de talonnage observé jusqu'à présent dans les solutions antérieures est supprimé. De la même manière, aucune usure de l'étançon n'est constatée.

Pour parfaire la fixation de la pièce 3 d'usure à l'étançon, en sus du premier ensemble vis 6/écrou 5 positionné au voisinage de l'extrémité libre de l'étançon 2, il peut être prévu un second ensemble vis/écrou. La présence d'une deuxième vis permet de maintenir solidement la pièce d'usure (ou le "cône" supportant cette pièce d'usure). En présence d'impacts répétés (cailloux), on évite ainsi toute possibilité de pivotement latéral de la pièce d'usure ou du cône supportant cette pièce d'usure. Il n'est pas nécessaire de reproduire un logement d'insertion de l'écrou dans l'étançon pour ce deuxième ensemble en raison du positionnement à un niveau plus élevé de l'écrou saillant rendant peu probable un endommagement de l'écrou par un caillou affleurant. En outre, si l'on analyse au travail les forces qui s'appliquent à la pièce d'usure et à ses éléments de fixation, le boulon du haut est en traction, alors que le boulon du bas est en compression. Etant en traction, il n'y a pas d'intérêt à diminuer l'épaisseur de l'étançon pour ce deuxième boulon.

Les dents de cultivateur décrites ci-dessus sont, comme cela a d'ores et déjà été mentionné, installées généralement sur un châssis dont l'avancement est obtenu à l'aide d'un engin tracteur. Les roues de ce véhicule tracteur ou les roues permettant de contrôler la profondeur de travail des outils agricoles ont tendance à laisser sur le sol des empreintes qu'il convient d'effacer par le passage de la dent de cultivateur, le marquage ou tassage étant engendré par la compaction des roues. Or, un sol qui comporte des écarts de hauteur n'est pas propice à un bon semis de la culture. En effet, on constate une variation des profondeurs de dépose des graines, une texture de sol différente et une accumulation d'eau par endroit. Tous ces éléments induisent une mauvaise germination, des écarts de stade de végétation de la culture d'où une maturité inégale et des pertes de rendement. Afin de corriger les effets négatifs du passage des roues ou chenilles des engins tracteurs ou des roues permettant le contrôle de profondeur de l'outil, il est nécessaire de pouvoir régler de façon individuelle la hauteur de la dent ou des dents se trouvant dans l'axe de passage des roues. L'abaissement localisé au niveau de la partie de sol tassée permet de décompacter le volume de terre initial. Ainsi, le terrain, après le passage de l'outil, est parfaitement nivelé et uniforme. Jusqu'à présent, ce réglage s'effectue soit par ajout d'une cale, soit par un réglage par boulon de la dent sur son support ou du support sur le châssis. Les inconvénients qui en résultent sont l'absence d'un réglage continu puisque ce réglage dépend soit des entraxes des boulons, soit de l'épaisseur des cales. Ainsi, il est parfois nécessaire, en fonction des paramètres du sol (texture, humidité, présence de résidus de récolte), de modifier au millimètre près le positionnement en hauteur d'une dent ou d'un groupe de dents. Dans le cas de l'utilisation de cale ou de boulons, cela demande un démontage fastidieux et la nécessité d'avoir à portée de main la cale de la bonne épaisseur ou un passage de boulon correspondant au positionnement souhaité de l'outil.

La dent, objet de l'invention, pallie cet inconvénient grâce à la conception de sa liaison au châssis qui permet un réglage en continu au millimètre près du terrage de la dent. La dent 1 de cultivateur présente ainsi une extrémité de l'étançon 2 raccordée au châssis par une pièce 8 de liaison affectant la forme d'une platine portant d'une part une bride 9 serrable à travers laquelle est engagée l'extrémité de l'étançon 2, d'autre part une lumière 10 pour le passage d'un moyen de serrage complémentaire, tel qu'un boulon 11, porté par l'étançon 2 et autorisant un réglage de position de terrage de l'étançon 2 par rapport à la pièce 8 de liaison. Ainsi, dans un premier temps, l'extrémité de l'étançon est introduite à travers la bride 9. Cette extrémité d'étançon est munie d'un perçage à travers lequel est introduit un boulon servant à la fixation de la pièce 8 de liaison à l'étançon 2. Une fois que la position de l'étançon a été ajustée en hauteur, grâce à la présence de la lumière 10 dans la pièce 8 de liaison qui autorise un déplacement à coulissement de l'étançon le long de la pièce 8, l'écrou du boulon est serré et la bride 9 est également serrée par l'intermédiaire d'un écrou supplémentaire. Ainsi, l'étançon 2 et la pièce 3 d'usure travaillante sont parfaitement immobilisés dans une position correspondant à celle souhaitée par l'utilisateur.

## Revendications

1. Dent (1) de cultivateur pour châssis porte-dents de travail du sol, du type comprenant un étançon (2) porteur et une pièce (3) d'usure amovible travaillant dans le sol,
**caractérisée en ce que** la fixation de la pièce (3) de travail amovible à l'étançon (2) est formée principalement d'un logement (4) ménagé dans l'étançon, au voisinage de l'extrémité libre de l'étançon (2), pour recevoir au moins un organe d'immobilisation d'un organe (6) de liaison, généralement du genre boulon ou clavette entre pièce (3) d'usure et étançon (2), pour isoler la partie de prise dudit organe (5) d'immobilisation en vue d'empêcher son usure prématurée par abrasion, ledit logement (4) étant de dimension supérieure à la dimension de l'organe (5) d'immobilisation pour autoriser un accès permanent audit organe (5) notamment lors des opérations de remplacement ou de réglage de la pièce (3) d'usure travaillante.

2. Dent (1) de cultivateur selon la revendication 1,
**caractérisée en ce que** le logement (4) de l'organe (5) d'immobilisation ménagé dans l'étançon (2) est obtenu, sans enlèvement de matière, par forgeage, de préférence à chaud, pour densifier dans cette zone la matière constitutive de l'étançon (2).

3. Dent (1) de cultivateur selon l'une des revendications 1 et 2,
**caractérisée en ce que** la pièce (3) d'usure travaillante est couplée directement à l'étançon (2) par boulonnage.

4. Dent (1) de cultivateur selon l'une des revendications 1 et 2,
**caractérisée en ce que** la pièce (3) d'usure est couplée à l'étançon (2), par une pièce (7) intermédiaire boulonnée à l'étançon (2), et sur laquelle la pièce (3) d'usure vient s'engager à coulissement.

5. Dent (1) de cultivateur selon l'une des revendications 1 à 4,
**caractérisée en ce qu'**elle comporte, pour son raccordement au châssis, une pièce (8) de liaison située à une extrémité de l'étançon (2), cette pièce (8) de liaison affectant la forme d'une platine portant d'une part une bride (9) serrable à travers laquelle est engagée l'extrémité de l'étançon (2), d'autre part une lumière (10) pour le passage d'un moyen de serrage complémentaire, tel qu'un boulon (11), porté par l'étançon (2) et autorisant un réglage de position de terrage de l'étançon (2) par rapport à la pièce de liaison.

## Claims

1. A cultivator tine (1) for a soil cultivation tine support frame of the type that comprises at least one bearing leg (2) and a removable wear part (3) which works the soil,
**characterized in that** the system for fixing the removable working part (3) to the leg (2) is mainly formed by a housing (4) which is provided in the leg (2) close to the free end thereof, in order to receive at least one member for blocking a connecting element (6), generally of the pin or cleat type, between the wear part (3) and the leg (2), such as to isolate the gripping part of the blocking member (5) and prevent the premature abrasive wear of same, the aforementioned housing (4) being larger than the blocking member (5) such that said member (5) can always be accessed when the working wear part (3) is being replaced or adjusted.

2. The cultivator tine (1) according to claim 1,
**characterized in that** the housing (4) of the blocking member (5) formed in the leg (2) is obtained, without removing material, by forging, preferably hot forging, to densify the component material of the leg (2) in that area.

3. The cultivator tine (1) according to one of claims 1 and 2,
**characterized in that** the working wear part (3) is directly coupled to the leg (2) by bolting.

4. The cultivator tine (1) according to one of claims 1 and 2,
**characterized in that** the wear part (3) is coupled to the leg (2), by an intermediate part (7) bolted to the leg (2), and on which the wear part (3) slidingly engages.

5. The cultivator tine (1) according to one of claims 1 to 4,
**characterized in that** for its connection to the support frame, it comprises a connecting part (8) situated at one end of the leg (2), said connecting part (8) assuming the form of a small plate supporting a tightenable flange (9) through which the end of the leg (2) is engaged on the one hand, and a lumen (10) for the passage of a complementary tightening means, such as a bolt (11), supported by the leg (2) and making it possible to adjust the tightening position of the leg (2) in relation to the connecting piece.

## Patentansprüche

1. Kultivatorzinken (1) für einen zirikentragenden Rahmen zur Bodenbearbeitung der Bauart, die mindestens eine tragende Strebe (2) und ein demontierbares Verschleißteil (3), das im Boden arbeitet, umfasst,
**dadurch gekennzeichnet, dass** die Befestigung des demontierbaren Arbeitsteils (3) an der Strebe (2) im Wesentlichen von einer Aufnahme (4) gebildet wird, die in der Nähe des freien Endes der Strebe (2) in die Strebe eingearbeitet ist, um mindestens ein Feststellorgan eines Verbindungsorgans (6), im Allgemeinen in der Art eines Bolzens oder Keils zwischen Verschleißteil (3) und Strebe (2), aufzunehmen, um den Befestigungsabschnitt des Befestigungsorgans (5) zu isolieren, um seinen vorzeitigen Verschleiß durch Abrieb zu verhindern, wobei die Aufnahme (4) größer bemessen ist als das Befestigungsorgan (5), um einen ständigen Zugang zu dem Organ (5) zu gestatten, vor allem bei Maßnahmen des Ersatzes oder der Einstellung des arbeitenden Verschleißteils(3).

2. Kultivatorzinken (1) nach Anspruch 1,
**dadurch gekennzeichnet, dass** die in die Strebe (2) eingearbeitete Aufnahme (4) des Befestigungsorgans (5) ohne Abtragen von Material durch Schmieden, vorzugsweise durch Warmschmieden, gewonnen wird, um in dieser Zone das Material, das die Strebe (2) bildet, zu verdichten.

3. Kultivatorzinken (1) nach einem der Ansprüche 1 und 2,
**dadurch gekennzeichnet, dass** das arbeitende Verschleißteil (3) mit der Strebe (2) direkt durch Verschraubung verbunden ist.

4. Kultivatorzinken (1) nach einem der Ansprüche 1 und 2,
**dadurch gekennzeichnet, dass** das Verschleißteil (3) mit der Strebe (2) durch ein Zwischenteil (7) verbunden ist, das mit der Strebe (2) verschraubt ist und in das das Verschleißteil (3) gleitend eingreift.

5. Kultivatorzinken (1) nach einem der Ansprüche 1 bis 4,
**dadurch gekennzeichnet, dass** er für seine Verbindung mit dem Rahmen ein Verbindungsteil (8) aufweist, das sich an einem Ende der Strebe (2) befindet, wobei dieses Verbindungsteil (8) die Form einer Platte hat, die auf einer Seite einen verspannbaren Flansch (9) trägt, durch den das Ende der Strebe (2) geführt ist, und auf der anderen Seite eine Öffnung (10) für den Durchgang eines ergänzenden Spannmittels wie beispielsweise ein Bolzen (11), der von der Strebe (2) getragen wird und eine Einstellung der Spannposition der Strebe (2) im Verhältnis zum Verbindungsteil erlaubt.
